# EUROPEAN PATENT APPLICATION

(11) **EP 4 706 405 A1**
(43) Date of publication of application: **11.03.2026**
(21) Application number: 24811120.5
(22) Date of filing: 21.05.2024
(51) Int. Cl.: A23L 15/00, A23L 9/10, A23L 35/00

(54) **LIQUID WHOLE EGG AND METHOD FOR PRODUCING PROCESSED EGG PRODUCT USING LIQUID WHOLE EGG**

(30) Priority: 23.05.2023 JP 2023084357
(71) Applicant: Kewpie Corporation, Tokyo 150-0002 (JP)
(72) Inventor: KODAMA, Daisuke, Chofu-shi, Tokyo 182-0002 (JP); IWAMOTO, Tomoko, Chofu-shi, Tokyo 182-0002 (JP); ARIMITSU, Kazuto, Chofu-shi, Tokyo 182-0002 (JP)
(74) Representative: Winter, Brandl - Partnerschaft mbB
(86) International application number: PCT/JP2024/018729
(87) International publication number: WO 2024/242113

(57) **Abstract**

The liquid whole egg of the present invention is a liquid whole egg wherein a soluble solids concentration is 24 to 29% by mass, and a ratio of egg white soluble solids content to egg yolk soluble solids content is 0.8 to 3.0.

## Description

### Technical Field

The present invention relates to a liquid whole egg and a method for producing a processed egg product using the liquid whole egg.

### Background Art

Eggs can be enjoyed for their own taste in dishes such as Japanese rolled omelets, fried eggs, and boiled eggs, but they can also be used to make a variety of dishes by combining them with other ingredients. For example, custard pudding and custard cream can be made by combining eggs with milk, and Japanese steamed egg custard and rolled omelets seasoned with broth can be made by combining eggs with broth. When making a dish by combining eggs with other ingredients in this way, if the flavor of the other ingredients, such as milk and broth, can be enhanced in addition to feeling the richness and flavor of the eggs, the dish becomes even more delicious.

Patent Literature 1 describes that by blending cellulose into a liquid egg, flavor deterioration of a processed egg product is prevented, foam stability, juiciness, and shape retention are improved, and texture is improved.

### Citation List

### Patent Literature

[Patent Literature 1] Japanese Unexamined Patent Publication No. 2009-65836

### Summary of Invention

### Technical Problem

However, there has been no finding to date that focuses on devising the composition of the liquid egg itself or on making the flavor of other ingredients, such as milk and broth, more perceptible.

In view of the circumstances described above, an object of the present invention is to provide a liquid whole egg that makes the flavor of other ingredients, such as milk and broth, more perceptible, and a method for producing a processed egg product using the liquid whole egg.

### Solution to Problem

As a result of diligent research to achieve the above object, the present inventors have found that by adjusting the soluble solids concentration of a liquid whole egg and the ratio of the egg white soluble solids content to the egg yolk soluble solids content in the liquid whole egg to a predetermined range, a liquid whole egg can be obtained that makes it easy to perceive the flavor of ingredients other than eggs, such as milk and broth, and have completed the present invention.

That is, the present invention is:
(1) A liquid whole egg, wherein a soluble solids concentration derived from eggs is 24 to 29% by mass, and a ratio of egg white soluble solids content to egg yolk soluble solids content is 0.8 to 3.0.
(2) The liquid whole egg according to (1), wherein the ratio of egg white soluble solids content to egg yolk soluble solids content is 1.1 to 3.0.
(3) The liquid whole egg according to (1), wherein the ratio of egg white soluble solids content to egg yolk soluble solids content is 1.1 to 2.0.
(4) The liquid whole egg according to any one of (1) to (3), wherein a proportion of ingredients other than eggs is 1% by mass or less.
(5) The liquid whole egg according to any one of (1) to (4), wherein a soluble solids concentration of liquid egg white contained in the liquid whole egg is 18 to 24%.
(6) A production method for a processed egg product, the method including using the liquid whole egg according to any one of (1) to (5).
(7) A preparation method for a liquid whole egg, the method including a step of mixing liquid egg white and liquid egg yolk such that a soluble solids concentration derived from eggs is 24 to 29% by mass and a ratio of egg white soluble solids content to egg yolk soluble solids content is 1.1 to 3.0.
(8) The preparation method according to (7), wherein a soluble solids concentration of the liquid egg white used in the mixing step is 18 to 24%.

### Advantageous Effects of Invention

According to the present invention, it is possible to provide a liquid whole egg that makes the flavor of other ingredients, such as milk and broth, more perceptible.

### Description of Embodiments

Hereinafter, the present invention will be described in detail. In the present invention, "%" means "% by mass".

### <Liquid Whole Egg>

The liquid whole egg of the present invention is a liquid substance obtained by homogenizing liquid egg yolk and liquid egg white of hen eggs, and has the same appearance and properties as a general liquid whole egg prepared by homogenizing egg contents obtained by breaking an in-shell egg and removing the eggshell, except that the soluble solids concentration derived from eggs is 24 to 29% and the ratio of the egg white soluble solids content to the egg yolk soluble solids content in the liquid whole egg is 0.8 to 3.0. Therefore, the liquid whole egg of the present invention can be used in the same manner as a general liquid whole egg. In addition, as the liquid egg yolk and liquid egg white used for preparing the liquid whole egg of the present invention, various forms can be used, such as those obtained by breaking eggs and used as they are, those that have undergone filtration treatment, those that have been frozen and then thawed, those that have been dried and then reconstituted with water, those that have undergone heat sterilization treatment, concentrated ones, and diluted ones. Here, homogenization in the present invention refers to mixing egg yolk and egg white to a state in which the distinction between egg yolk and egg white is not apparent. In addition, the liquid whole egg of the present invention may be one that has been appropriately subjected to treatments such as sterilization, freezing, and filtration to improve storage stability.

### <Soluble Solids Concentration Derived from Eggs>

The liquid whole egg of the present invention has a soluble solids concentration derived from eggs of 24 to 29%. Here, the soluble solids concentration derived from eggs means the concentration of soluble solids derived from eggs, such as egg yolk, egg white, chalaza, and eggshell membrane. When the soluble solids concentration derived from eggs contained in the liquid whole egg is within the above range, a processed egg product with appropriate hardness can be obtained when used in the same way as a normal liquid whole egg or a shell egg, and the flavor of not only the egg but also other ingredients becomes easier to perceive. The soluble solids concentration is preferably 24.5 to 28.5%, because it makes it easier to obtain a processed egg product with better texture and a more perceptible flavor of the ingredients. The soluble solids concentration derived from eggs in the present invention is a value measured at 20°C using a refractometer, and is a value corresponding to the mass percentage of a sucrose aqueous solution at 20°C. The soluble solids concentration derived from eggs can be set within the range described above, and may be, for example, 24.1% or more, 24.2% or more, 24.3% or more, 24.4% or more, 24.5% or more, 24.6% or more, 24.7% or more, 24.8% or more, 24.9% or more, 25% or more, 25.1% or more, 25.2% or more, 25.3% or more, 25.4% or more, 25.5% or more, 25.6% or more, 25.7% or more, 25.8% or more, 25.9% or more, 26% or more, 26.1% or more, 26.2% or more, 26.3% or more, 26.4% or more, 26.5% or more, 26.6% or more, or 26.7% or more, and may also be, for example, 28.9% or less, 28.8% or less, 28.7% or less, 28.6% or less, 28.5% or less, 28.4% or less, 28.3% or less, 28.2% or less, 28.1% or less, 28% or less, 27.9% or less, 27.8% or less, 27.7% or less, 27.6% or less, 27.5% or less, 27.4% or less, 27.3% or less, 27.2% or less, 27.1% or less, 27% or less, 26.9% or less, 26.8% or less, or 26.7% or less. Specific ranges for the soluble solids concentration derived from eggs may be, for example, 24.1 to 28.8%, 24.2 to 28.6%, 24.3 to 28.4%, 24.4 to 28.2%, 24.5 to 28%, 24.6 to 27.8%, or 24.7 to 27.6%. The upper and lower limits of the numerical ranges exemplified for the soluble solids concentration derived from eggs can be arbitrarily combined.

### <Ratio of Egg White Soluble Solids Content to Egg Yolk Soluble Solids Content>

In the liquid whole egg of the present invention, the ratio of the egg white soluble solids content to the egg yolk soluble solids content is 0.8 to 3.0. The egg yolk soluble solids content means the total amount of soluble solids derived from egg yolk contained in the liquid whole egg, and the egg white soluble solids content means the total amount of soluble solids derived from egg white contained in the liquid whole egg. Therefore, the fact that the ratio of the egg white soluble solids content to the egg yolk soluble solids content is within the above range means that the ratio of egg yolk and egg white is adjusted with a slightly higher proportion of soluble solids derived from egg white than in a general liquid whole egg. This makes it possible to obtain a processed egg product in which the flavor of other ingredients is easy to perceive and which also has an excellent texture. Furthermore, since the flavor of the ingredients becomes easier to perceive, the ratio of the egg white soluble solids content to the egg yolk soluble solids content is preferably 1.9 to 2.5, and more preferably 1.1 to 2.0. Although the reason why the flavor of other ingredients becomes easier to perceive when the ratio of the egg white soluble solids content to the egg yolk soluble solids content is within the above range is not clear, it is conceivable that the change in the ratio of egg yolk and egg white weakened the flavor masking power due to emulsification, making it easier to perceive the flavor of other ingredients, and that the change in the network structure of gel made it easier for the flavor of broth and milk to emerge upon collapse of the gel. The ratio of the egg white soluble solids content to the egg yolk soluble solids content can be set within the range described above, and may be, for example, 1.0 or more, 1.1 or more, 1.2 or more, 1.3 or more, 1.4 or more, 1.5 or more, 1.6 or more, 1.7 or more, 1.8 or more, or 1.9 or more, and may also be, for example, 2.9 or less, 2.8 or less, 2.7 or less, 2.6 or less, 2.5 or less, 2.4 or less, 2.3 or less, 2.2 or less, 2.1 or less, or 2.0 or less. Specific ranges for the ratio of the egg white soluble solids content to the egg yolk soluble solids content may be, for example, 1.0 to 3.0, 1.0 to 2.5, 1.0 to 2.2, 1.0 to 2.1, or 1.0 to 2.0, and may also be, for example, 1.1 to 3.0, 1.1 to 2.5, 1.1 to 2.2, 1.1 to 2.1, or 1.1 to 2.0. The upper and lower limits of the numerical ranges exemplified for the ratio of the egg white soluble solids content to the egg yolk soluble solids content can be arbitrarily combined.

### <Other Ingredients>

The liquid whole egg of the present invention may contain ingredients other than eggs to the extent that the effects of the present invention are not impaired, but since it is easy to use for various applications, the soluble solids concentration from ingredients other than eggs is preferably 1% or less, preferably 0.5% or less, preferably 0.1% or less, and more preferably not contained at all.

### <Processed Egg Product>

In the present invention, a processed egg product means a processed product prepared using the liquid whole egg of the present invention. Examples of the processed egg product include scrambled eggs, omelets, Japanese rolled omelets, finely scrambled eggs, thin egg sheets, shredded thin omelets, custard cream, custard pudding, Japanese steamed egg custard, and chicken-and-egg rice bowls. In particular, a processed egg product containing milk or broth is more preferable because it easily exhibits the effects of the present invention.

### <Method for Preparing Liquid Whole Egg>

The method for preparing the liquid whole egg of the present invention is not particularly limited as long as it is prepared such that the soluble solids concentration derived from eggs in the liquid whole egg is 24 to 29% and the ratio of the egg white soluble solids content to the egg yolk soluble solids content is within the range of 0.8 to 3.0. For example, it can be prepared by preparing a liquid egg white with a high solids content by a method such as concentrating liquid egg white or adding dried egg white, and then adjusting the mixing ratio of the liquid egg white and liquid egg yolk. As the liquid egg white used for preparing the liquid whole egg of the present invention, it is preferable to use a liquid egg white with a soluble solids concentration of 18 to 24%, and more preferable to use a liquid egg white with a soluble solids concentration of 19 to 23%, because it is easy to adjust the soluble solids concentration derived from eggs and the ratio of the egg white soluble solids content to the egg yolk soluble solids content to a predetermined range. The soluble solids concentration of the liquid egg white can be set within the range described above, and may be, for example, 18.1% or more, 18.2% or more, 18.3% or more, 18.4% or more, 18.5% or more, 18.6% or more, 18.7% or more, 18.8% or more, 18.9% or more, or 19% or more, and may also be, for example, 23.9% or less, 23.8% or less, 23.7% or less, 23.6% or less, 23.5% or less, 23.4% or less, 23.3% or less, 23.2% or less, 23.1% or less, or 23% or less. Specific ranges for the soluble solids concentration of the liquid egg white may be, for example, 18.1 to 24%, 18.2 to 24%, 18.3 to 24%, 18.4 to 24%, 18.5 to 24%, 18.6 to 24%, 18.7 to 24%, 18.8 to 24%, 18.9 to 24%, or 19 to 24%, and may also be, for example, 18.1 to 23%, 18.2 to 23%, 18.3 to 23%, 18.4 to 23%, 18.5 to 23%, 18.6 to 23%, 18.7 to 23%, 18.8 to 23%, 18.9 to 23%, or 19 to 23%. The upper and lower limits of the numerical ranges exemplified for the soluble solids concentration of the liquid egg white can be arbitrarily combined. The soluble solids concentration of the liquid egg yolk is not particularly limited, but can be 40 to 55%. The soluble solids concentration of the liquid egg yolk is a value obtained after removing a portion of liquid egg white that is mixed into the liquid egg yolk when a hen egg is broken and separated into liquid egg yolk and liquid egg white. In the preparation method, the aspects (numerical ranges, etc.) exemplified in the description of the liquid whole egg to the soluble solids concentration derived from eggs in the liquid whole egg, the ratio of the egg white soluble solids content to the egg yolk soluble solids content, and the like can be applied without limitation.

A more specific embodiment of the method for preparing a liquid whole egg includes, for example, a preparation method comprising a step of mixing liquid egg white and liquid egg yolk (mixing step) such that the soluble solids concentration derived from eggs is 24 to 29% by mass and the ratio of the egg white soluble solids content to the egg yolk soluble solids content is 1.1 to 3.0. In the mixing step, the aspects (numerical ranges, etc.) exemplified in the description of the liquid whole egg to the soluble solids concentration derived from eggs and the ratio of the egg white soluble solids content to the egg yolk soluble solids content can be applied without limitation.

In the mixing step, as a method for adjusting the soluble solids concentration derived from eggs and the ratio of the egg white soluble solids content to the egg yolk soluble solids content within the above-mentioned ranges, for example, a method of using a liquid egg white having a higher soluble solids concentration than the liquid egg white obtained by breaking a normal egg can be exemplified. As a method for obtaining such a liquid egg white with a high soluble solids concentration, as described above, examples include a method of concentrating the liquid egg white obtained by breaking eggs, a method of adding dried egg white to the liquid egg white obtained by breaking eggs, a method of reconstituting dried egg white with water to a higher concentration than before drying, and a method of selecting and using eggs with a higher soluble solids concentration in the liquid egg white than normal eggs. The specific numerical range of the soluble solids concentration of the liquid egg white used in the mixing step is as described above. As the liquid egg yolk used in the mixing step, the liquid egg yolk obtained by breaking a normal egg may be used as it is.

Hereinafter, the present invention will be specifically described based on examples and comparative examples. The present invention is not limited to these.

### Examples

### <Preparation of Liquid Whole Egg>

After separating hen eggs into yolk and white, a liquid egg white prepared by reconstituting dried egg white with water to a high concentration was mixed with the egg white to prepare multiple liquid egg whites with different soluble solids concentrations. Next, the liquid egg whites were mixed with liquid egg yolk at the ratios shown in Table 1 to prepare the liquid whole eggs of Examples 1 to 4 and Comparative Examples 1 to 4. A commercially available liquid whole egg was used as a Control Example. The soluble solids concentration was measured using a digital refractometer (Digital Refractometer RX-7000i, manufactured by ATAGO CO., LTD.) with the temperature adjusted to 20°C.

### <Test Example 1: Preparation of Custard Pudding>

20% of each prepared liquid whole egg, 50% of milk, 17% of fresh cream, and 13% of granulated sugar were mixed, filled into containers, and steamed at 85°C for 30 minutes to prepare custard pudding. The prepared custard puddings were tasted by three expert panelists, who evaluated the milk flavor according to the criteria below. The results are shown in Table 1.

### [Evaluation Criteria for Flavor]

A: Milk flavor is easier to perceive compared to the Control Example.
B: Milk flavor is slightly easier to perceive compared to the Control Example.
C: Milk flavor is equivalent to the Control Example.
D: Milk flavor is more difficult to perceive compared to the Control Example.

**[Table 1]**

| | Control Example | Comparative Example 1 | Comparative Example 2 | Example 1 | Example 2 | Comparative Example 3 | Comparative Example 4 | Example 3 | Example 4 |
|---|---|---|---|---|---|---|---|---|---|
| Soluble solids concentration of liquid egg white (%) | 15.4 | 17.1 | 18.5 | 18.8 | 18.8 | 24.8 | 26.7 | 21.7 | 19.7 |
| Soluble solids concentration of liquid egg yolk (%) | 48.0 | 48.0 | 48.0 | 48.0 | 48.0 | 48.0 | 48.0 | 48.0 | 48.0 |
| Amount of liquid egg white / Amount of liquid egg yolk | 2.0 | 3.7 | 1.4 | 2.6 | 3.7 | 7.3 | 6.1 | 4.3 | 2.6 |
| Soluble solids concentration of liquid whole egg (%) | 26.9 | 23.6 | 31.6 | 27.1 | 24.7 | 27.0 | 29.2 | 26.7 | 28.1 |
| Egg white soluble solids content / Egg yolk soluble solids content | 0.6 | 1.3 | 0.5 | 1.0 | 1.5 | 3.8 | 3.4 | 2.0 | 1.1 |
| Milk flavor | - | C | D | B | A | D | D | A | A |

As shown in Table 1, it was found that by using a liquid whole egg in which the soluble solids concentration is 24 to 29% by mass and the mass ratio of the egg white soluble solids content to the egg yolk soluble solids content is 0.8 to 3.0, the flavor of other ingredients (milk) is easy to perceive.

### <Test Example 2: Preparation of Japanese Steamed Egg Custard>

21% of the liquid whole egg of the Control Example, Example 2, Comparative Example 2, or Comparative Example 3, 1.3% of hon-mirin (sweet cooking rice wine), 1.1% of soy sauce, 0.8% of salt, 0.7% of bonito broth, and 75.1% of clear water were mixed, filled into containers, and steamed at 85°C for 30 minutes to prepare Japanese steamed egg custard. The prepared Japanese steamed egg custards were tasted by three expert panelists, who evaluated the broth flavor according to the criteria below.

### [Evaluation Criteria for Flavor]

A: Broth flavor is easier to perceive compared to the Control Example.
B: Broth flavor is slightly easier to perceive compared to the Control Example.
C: Broth flavor is equivalent to the Control Example.
D: Broth flavor is more difficult to perceive compared to the Control Example.

As a result, the Japanese steamed egg custard prepared using the liquid whole egg of Example 2 had a more perceptible broth flavor than the Japanese steamed egg custard of the Control Example. On the other hand, the broth flavor could not be perceived in the Japanese steamed egg custards prepared using the liquid whole eggs of Comparative Examples 2 and 3 compared to the Japanese steamed egg custard of the Control Example. Furthermore, the Japanese steamed egg custard prepared using the liquid whole egg of Example 2 had a good smooth texture and a preferable texture.

## Claims

1. A liquid whole egg,
wherein a soluble solids concentration derived from eggs is 24 to 29% by mass, and
wherein a ratio of egg white soluble solids content to egg yolk soluble solids content is 0.8 to 3.0.

2. The liquid whole egg according to claim 1, wherein the ratio of egg white soluble solids content to egg yolk soluble solids content is 1.1 to 3.0.

3. The liquid whole egg according to claim 1, wherein the ratio of egg white soluble solids content to egg yolk soluble solids content is 1.1 to 2.0.

4. The liquid whole egg according to any one of claims 1 to 3, wherein a proportion of ingredients other than eggs is 1% by mass or less.

5. The liquid whole egg according to any one of claims 1 to 4, wherein a soluble solids concentration of liquid egg white contained in the liquid whole egg is 18 to 24%.

6. A production method for a processed egg product, the method comprising using the liquid whole egg according to any one of claims 1 to 5.

7. A preparation method for a liquid whole egg, the method comprising:
a step of mixing liquid egg white and liquid egg yolk such that a soluble solids concentration derived from eggs is 24 to 29% by mass and a ratio of egg white soluble solids content to egg yolk soluble solids content is 1.1 to 3.0.

8. The preparation method according to claim 7, wherein a soluble solids concentration of the liquid egg white used in the mixing step is 18 to 24%.
